# EUROPÄISCHE PATENTSCHRIFT

(11) **EP 3 619 441 B1**
(45) Veröffentlichungstag und Bekanntmachung des Hinweises auf die Patenterteilung: **13.01.2021**
(21) Anmeldenummer: 18718681.2
(22) Anmeldetag: 05.04.2018
(51) Int. Cl.: F16D 13/56, F16D 13/68, F16D 13/71

(54) **REIBUNGSKUPPLUNG**
FRICTION CLUTCH
EMBRAYAGE À FRICTION

(30) Priorität: 04.05.2017 DE 102017109516
(43) Veröffentlichungstag der Anmeldung: 11.03.2020
(73) Patentinhaber: Schaeffler Technologies AG & Co. KG, 91074 Herzogenaurach (DE)
(72) Erfinder: MERK, Vladimir, 77815 Bühl (DE); ACKER, Christophe, 67760 Gambsheim (FR); MOREL, Sebastien, 67850 Offendorf (FR); OBITZ, Alexander, 77815 Bühl (DE); HELFER, Marc, 67530 Ottrott (FR)
(86) Internationale Anmeldenummer: PCT/DE2018/100308
(87) Internationale Veröffentlichungsnummer: WO 2018/202238

(56) Entgegenhaltungen:
- EP-A1- 2 868 942
- DE-A1- 4 411 641
- US-A1- 2002 014 386
- US-A1- 2003 234 149

## Beschreibung

Die Erfindung betrifft eine Reibungskupplung zum Kuppeln einer Antriebswelle eines Kraftfahrzeugmotors mit (genau) einer Getriebeeingangswelle eines Kraftfahrzeuggetriebes. Insbesondere ist die Reibungskupplung für einen Traktor vorgesehen. Über die Reibungskupplung können auch andere Wellen miteinander gekoppelt werden.

DE4411641A1 beschreibt eine Reibungskupplung zum Kuppeln einer Antriebswelle eines Kraftfahrzeugmotors mit einer Getriebeeingangswelle eines Kraftfahrzeuggetriebes; wobei die Reibungskupplung zumindest einen Kupplungsdeckel, eine entlang einer Drehachse der Reibungskupplung in einer axialen Richtung verlagerbare Anpressplatte sowie ein Hebelelement zur Betätigung der Anpressplatte aufweist, wobei zumindest eine erste Reibscheibe zwischen einer Gegenplatte und der mindestens einen Lamelle und eine zweite Reibscheibe zwischen der mindestens einen Lamelle und der Anpressplatte anordenbar ist und beide Reibscheiben in der Umfangsrichtung formschlüssig mit einer Nabe verbindbar sind.

Es besteht ein ständiges Bedürfnis eine Reibungskupplung einfach und möglichst kostengünstig herzustellen.

Es ist die Aufgabe der Erfindung eine Reibungskupplung bereitzustellen, die eine einfache und kostengünstige Herstellung ermöglicht.

Die Lösung der Aufgabe erfolgt erfindungsgemäß durch eine Reibungskupplung mit den Merkmalen des Anspruchs 1. Weitere vorteilhafte Ausgestaltungen der Erfindung sind in den abhängig formulierten Ansprüchen angegeben. Die in den abhängig formulierten Ansprüchen einzeln aufgeführten Merkmale sind in technologisch sinnvoller Weise miteinander kombinierbar und können weitere Ausgestaltungen der Erfindung definieren. Darüber hinaus werden die in den Ansprüchen angegebenen Merkmale in der Beschreibung näher präzisiert und erläutert, wobei weitere bevorzugte Ausgestaltungen der Erfindung dargestellt werden.

Es wird eine Reibungskupplung zum Kuppeln einer Antriebswelle eines Kraftfahrzeugmotors mit (genau) einer Getriebeeingangswelle eines Kraftfahrzeuggetriebes vorgeschlagen. Die Reibungskupplung umfasst zumindest einen Kupplungsdeckel, eine entlang einer Drehachse der Reibungskupplung in einer axialen Richtung verlagerbare Anpressplatte sowie ein Hebelelement, z. B. eine Tellerfeder, zur Betätigung der Anpressplatte. Die Anpressplatte weist eine Mehrzahl von Aufnahmen zur Aufnahme von zumindest einer Lamelle auf, wobei jede der Aufnahmen mit jeder der mindestens einen Lamelle in einer Umfangsrichtung eine formschlüssige Verbindung ausbildet. Die mindestens eine Lamelle weist in einer radialen Richtung innerhalb der Aufnahmen an jeder der in die axiale Richtung weisenden Stirnflächen eine Reibfläche auf, wobei jede Reibfläche mit einer von einer Mehrzahl von Reibscheiben der Reibungskupplung zur Übertragung eines Drehmoments reibschlüssig verbindbar ist. Zumindest eine erste Reibscheibe ist zwischen einer Gegenplatte und der mindestens einen Lamelle und eine zweite Reibscheibe zwischen der mindestens einen Lamelle und der Anpressplatte anordenbar, wobei beide Reibscheiben in der Umfangsrichtung formschlüssig mit einer Nabe verbindbar sind.

Bei dieser Reibungskupplung wird die mindestens eine Lamelle über die Anpressplatte und nicht über ein Schwungrad der Reibungskupplung geführt. Damit ist eine Anpassung des Schwungrades nicht erforderlich. Die vorgeschlagene Reibungskupplung kann damit bei sogenannten Flachschwungrädern anstatt nur bei Topfschwungrädern eingesetzt werden. Flachschwungräder weisen insbesondere eine Breite entlang der axialen Richtung auf, die z. B. durch die Breite der Verzahnung bzw. durch die Breite einer Dämpfungseinrichtung vorgegeben ist. Demgegenüber weisen Topfschwungräder eine zusätzliche Erstreckung entlang der axialen Richtung zur Aufnahme der Lamellen auf.

Ein weiterer Vorteil ist, dass Anpressplatte und Lamelle gemeinsam getestet werden können, ohne das ein üblicherweise mit der Antriebswelle verbundenes Schwungrad bzw. ein Kraftfahrzeug mit Kraftfahrzeugmotor und Antriebswelle benötigt wird.

Weiter können insbesondere zahlreichen Bauteile, z. B. Kupplungsdeckel, Tellerfeder, ggf. Blattfedern, von bekannten (auch von trockenen) (Einfach-)Reibungskupplungen übernommen werden. Damit können Entwicklungskosten und Werkzeugkosten reduziert bzw. eingespart werden.

Bevorzugt ist die Reibungskupplung eine normal eingerückte Reibungskupplung, bei der bei unbetätigtem Hebelelement die Anpressplatte über die mindestens eine Lamelle und die Gegenplatte mit den Reibscheiben reibschlüssig verbindbar ist. Bei Betätigung des Hebelelements wird die Anpressplatte z. B. durch Blattfedern von der Gegenplatte weggerückt, so dass die mindestens eine Lamelle und die Reibscheiben nicht mehr reibschlüssig verbunden sind. Damit kann die Nabe von der Anpressplatte entkoppelt werden.

Insbesondere ist die Reibungskupplung eine Nass-Kupplung. Bei einer Nass-Kupplung wird ein Fluid (z. B. ein Öl) in die Reibungskupplung hinein transportiert, so dass die Bauteile der Reibungskupplung (z. B. die Reibflächen der Lamellen und die Reibscheiben, sowie die Gegenplatte und Anpressplatte) geschmiert und gekühlt werden.

Bevorzugt ist die Reibungskupplung eine Einfachkupplung (und keine Doppelkupplung) und weist genau eine Anpressplatte (und ein Hebelelement) auf.

Bevorzugt ist die Anpressplatte über eine Mehrzahl von Blattfedern mit dem Kupplungsdeckel verbunden. Die Blattfedern erzeugen eine Vorspannung entlang der axialen Richtung, so dass bei betätigter Reibungskupplung die Anpressplatte von der Gegenplatte weggerückt wird.

Insbesondere ist jede Blattfeder in der radialen Richtung außerhalb der Reibflächen an der Anpressplatte angebunden. Bevorzugt erstrecken sich die Blattfedern im Wesentlichen (ausschließlich) entlang der Umfangsrichtung und zumindest teilweise entlang der axialen Richtung. Insbesondere ist jede Blattfeder in der radialen Richtung auch außerhalb der Reibflächen an dem Kupplungsdeckel angebunden.

Insbesondere weist die Reibungskupplung mindestens zwei Lamellen auf, wobei zwischen den zwei Lamellen eine dritte Reibscheibe anordenbar ist und die dritte Reibscheibe in der Umfangsrichtung formschlüssig mit einer Nabe verbindbar ist.

Bevorzugt sind in der Mehrzahl von Aufnahmen der einen Anpressplatte eine unterschiedliche Anzahl von Lamellen anordenbar. Die Anordnung von mehreren Lamellen erhöht die Anzahl der Reibkontakte der Reibungskupplung, wodurch ein größeres Drehmoment reibschlüssig übertragen werden kann. Insbesondere kann durch die Erhöhung der Anzahl von Reibkontakten auch bei Anwesenheit eines Fluids (Nass-Kupplung) an den Reibkontakten und dem sich dadurch einstellenden Reibungskoeffizient ein sehr hohes Drehmoment übertragen werden.

Eine solche Anpressplatte kann damit für unterschiedliche Anwendungsfälle eingesetzt werden. Je nach der Größe des zu übertragenden Drehmoments kann eine erforderliche Anzahl von Lamellen und Reibscheiben in der Reibungskupplung eingesetzt werden, wobei die gleiche Anpressplatte für unterschiedliche Anzahlen von Lamellen und Reibscheiben einsetzbar ist.

Insbesondere können also z. B. eine, zwei, drei oder sogar vier (oder mehr) Lamellen vorgesehen sein, die in den Aufnahmen angeordnet sind. Zwischen den Lamellen sowie zwischen einer äußeren (entlang der axialen Richtung gesehen) Lamelle und der Gegenplatte sowie zwischen einer anderen äußeren Lamelle und der Anpressplatte ist jeweils eine Reibscheibe angeordnet. Auf jeder Stirnseite der Reibscheiben ist jeweils ein Reibkontakt mit der jeweils benachbart angeordneten Komponente (also Gegenplatte, Lamelle oder Anpressplatte) ausgebildet.

Insbesondere sind die Aufnahmen (der Mehrzahl von Aufnahmen) entlang der Umfangsrichtung gleichmäßig voneinander beabstandet angeordnet. Insbesondere sind insgesamt drei Aufnahmen vorgesehen, die um jeweils 120 Winkelgrad voneinander beabstandet in der Anpressplatte angeordnet sind. Bevorzugt sind vier Aufnahmen vorgesehen, die um jeweils 90 Winkelgrad voneinander beabstandet in der Anpressplatte angeordnet sind.

Insbesondere umfasst die Reibungskupplung zusätzlich die Gegenplatte und die Mehrzahl von Reibscheiben (sowie die Nabe). Insbesondere wird ein von dem Kraftfahrzeugmotor erzeugtes Drehmoment über den Kupplungsdeckel, die Anpressplatte und die Gegenplatte auf die Lamellen übertragen. Bei einer reibschlüssigen Verbindung von Gegenplatte, Lamellen und Anpressplatte mit den Reibscheiben wird das Drehmoment über die Reibscheiben auf die Nabe und über die Nabe auf die Getriebeeingangswelle übertragen.

Vorsorglich sei angemerkt, dass die hier verwendeten Zahlwörter ("erste", "zweite",...) vorrangig (nur) zur Unterscheidung von mehreren gleichartigen Gegenständen, Größen oder Prozessen dienen, also insbesondere keine Abhängigkeit und/oder Reihenfolge dieser Gegenstände, Größen oder Prozesse zueinander zwingend vorgeben. Sollte eine Abhängigkeit und/oder Reihenfolge erforderlich sein, ist dies hier explizit angegeben oder es ergibt sich offensichtlich für den Fachmann beim Studium der konkret beschriebenen Ausgestaltung.

Die Erfindung sowie das technische Umfeld werden nachfolgend anhand der Figuren näher erläutert. Es ist darauf hinzuweisen, dass die Erfindung durch die gezeigten Ausführungsbeispiele nicht beschränkt werden soll. Insbesondere ist es, soweit nicht explizit anders dargestellt, auch möglich, Teilaspekte der in den Figuren erläuterten Sachverhalte zu extrahieren und mit anderen Bestandteilen und Erkenntnissen aus der vorliegenden Beschreibung und/oder Figuren zu kombinieren. Insbesondere ist darauf hinzuweisen, dass die Figuren und insbesondere die dargestellten Größenverhältnisse nur schematisch sind. Gleiche Bezugszeichen bezeichnen gleiche Gegenstände, so dass ggf. Erläuterungen aus anderen Figuren ergänzend herangezogen werden können. Es zeigen:
- Fig. 1:: eine Seitenansicht einer Reibungskupplung im Schnitt;
- Fig. 2:: eine Ansicht der Reibungskupplung nach Fig. 1 entlang einer Drehachse; und
- Fig. 3:: eine weitere Seitenansicht der Reibungskupplung nach Fig. 1 und 2.

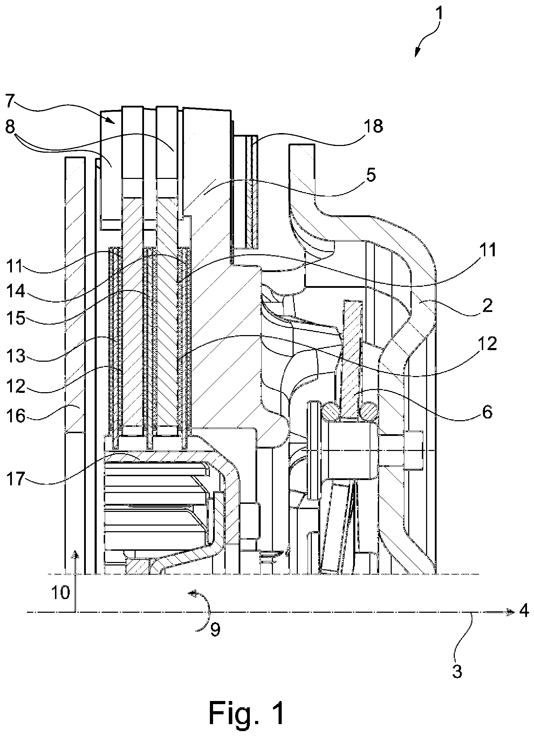

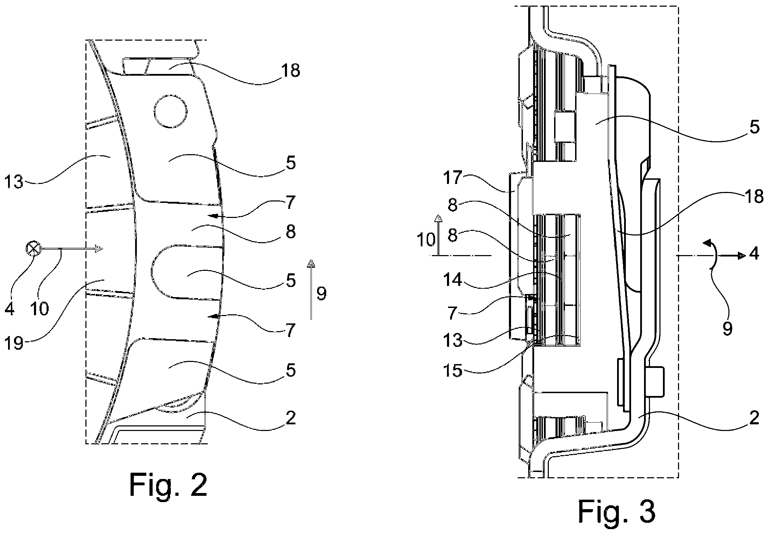

Fig. 1 zeigt eine Seitenansicht einer Reibungskupplung 1 im Schnitt. Fig. 2 zeigt eine Ansicht der Reibungskupplung 1 nach Fig. 1 entlang einer Drehachse 3. Fig. 3 zeigt eine weitere Seitenansicht der Reibungskupplung 1 nach Fig. 1 und 2. Die Fig. 1 bis 3 werden im Folgenden gemeinsam beschrieben.

Die Reibungskupplung 1 umfasst einen Kupplungsdeckel 2, eine entlang einer Drehachse 3 der Reibungskupplung 1 in einer axialen Richtung 4 verlagerbare Anpressplatte 5 sowie ein Hebelelement 6, hier eine Tellerfeder, zur Betätigung der Anpressplatte 5. Die Anpressplatte 5 weist eine Mehrzahl von Aufnahmen 7 zur Aufnahme von zwei Lamellen 8 auf, wobei jede der Aufnahmen 7 mit jeder der zwei Lamellen 8 in einer Umfangsrichtung 9 eine formschlüssige Verbindung ausbildet. Die zwei Lamellen 8 weisen in einer radialen Richtung 10 innerhalb der Aufnahmen 7 an jeder der in die axiale Richtung 4 weisenden Stirnflächen 11 eine Reibfläche 12 auf, wobei jede Reibfläche 12 mit einer von einer Mehrzahl von Reibscheiben 13, 14, 15 der Reibungskupplung 1 zur Übertragung eines Drehmoments reibschlüssig verbindbar ist. Eine erste Reibscheibe 13 ist zwischen einer Gegenplatte 16 und einer der zwei Lamellen 8 und eine zweite Reibscheibe 14 zwischen der anderen der zwei Lamellen 8 und der Anpressplatte 5 angeordnet, wobei alle Reibscheiben 13, 14, 15 in der Umfangsrichtung 9 formschlüssig mit einer Nabe 17 verbunden sind.

Die Reibungskupplung 1 ist eine normal eingerückte Reibungskupplung 1, bei der bei unbetätigtem Hebelelement 6 die Anpressplatte 5 über die Lamellen 8 und die Gegenplatte 16 mit den Reibscheiben 13, 14, 15 reibschlüssig verbunden ist. Bei Betätigung des Hebelelements 6 wird die Anpressplatte 5 durch Blattfedern 18 von der Gegenplatte 16 weggerückt, so dass die Lamellen 8 und die Reibscheiben 13, 14, 15 nicht mehr reibschlüssig verbunden sind. Damit kann die Nabe 17 von der Anpressplatte 5 entkoppelt werden.

Die Reibungskupplung 1 ist eine Einfachkupplung (und keine Doppelkupplung) und weist genau eine Anpressplatte 5 und genau ein Hebelelement 6 auf.

Die Anpressplatte 5 ist über eine Mehrzahl von Blattfedern 18 mit dem Kupplungsdeckel 2 verbunden. Die Blattfedern 18 erzeugen eine Vorspannung entlang der axialen Richtung 4, so dass bei betätigter Reibungskupplung 1 die Anpressplatte 5 von der Gegenplatte 16 weggerückt wird.

Jede Blattfeder 18 ist in der radialen Richtung 10 außerhalb der Reibflächen 12 an der Anpressplatte 5 angebunden. Die Blattfedern 18 erstrecken sich ausschließlich entlang der Umfangsrichtung 9 und zumindest teilweise entlang der axialen Richtung 4. Jede Blattfeder 18 ist in der radialen Richtung 10 außerhalb der Reibflächen 12 an dem Kupplungsdeckel 2 angebunden.

Die Reibungskupplung 1 weist zwei Lamellen 8 auf, wobei zwischen den zwei Lamellen 8 eine dritte Reibscheibe 15 angeordnet ist und die dritte Reibscheibe 15 in der Umfangsrichtung 9 formschlüssig mit einer Nabe 17 verbunden ist.

Bevorzugt sind in der Mehrzahl von Aufnahmen 7 der einen Anpressplatte 5 eine unterschiedliche Anzahl von Lamellen 8 anordenbar. Die Anordnung von mehreren Lamellen 8 erhöht die Anzahl der Reibkontakte der Reibungskupplung 1, wodurch ein größeres Drehmoment reibschlüssig übertragen werden kann. Insbesondere kann durch die Erhöhung der Anzahl von Reibkontakten auch bei Anwesenheit eines Fluids (Nass-Kupplung) an den Reibkontakten und dem sich dadurch einstellenden Reibungskoeffizient ein sehr hohes Drehmoment übertragen werden.

Insbesondere können also z. B. eine, zwei, drei oder sogar vier (oder mehr) Lamellen 8 vorgesehen sein, die in den Aufnahmen 7 angeordnet sind. Zwischen den Lamellen 8 sowie zwischen einer äußeren (entlang der axialen Richtung 4 gesehen) Lamelle 8 und der Gegenplatte 16 sowie zwischen einer anderen äußeren Lamelle 8 und der Anpressplatte 5 ist jeweils eine Reibscheibe 13, 14, 15 angeordnet. Auf jeder (in die axiale Richtung 4 weisenden) Stirnseite 19 der Reibscheiben 13, 14, 15 ist jeweils ein Reibkontakt mit der jeweils benachbart angeordneten Komponente (also Gegenplatte 16, Lamelle 8 oder Anpressplatte 5) ausgebildet.

Ein von einem Kraftfahrzeugmotor erzeugtes Drehmoment wird über den Kupplungsdeckel 2, die Anpressplatte 5 und die Gegenplatte 16 auf die Lamellen 8 übertragen. Bei einer reibschlüssigen Verbindung von Gegenplatte 16, Lamellen 8 und Anpressplatte 5 mit den Reibscheiben 13, 14, 15 wird das Drehmoment über die Reibscheiben 13, 14, 15 auf die Nabe 17 und über die Nabe 17 auf die Getriebeeingangswelle übertragen.

### Bezugszeichenliste

- 1: Reibungskupplung
- 2: Kupplungsdeckel
- 3: Drehachse
- 4: axiale Richtung
- 5: Anpressplatte
- 6: Hebelelement
- 7: Aufnahme
- 8: Lamelle
- 9: Umfangsrichtung
- 10: radiale Richtung
- 11: Stirnfläche
- 12: Reibfläche
- 13: erste Reibscheibe
- 14: zweite Reibscheibe
- 15: dritte Reibscheibe
- 16: Gegenplatte
- 17: Nabe
- 18: Blattfeder
- 19: Stirnseite

## Patentansprüche

1. Reibungskupplung (1) zum Kuppeln einer Antriebswelle eines Kraftfahrzeugmotors mit einer Getriebeeingangswelle eines Kraftfahrzeuggetriebes; wobei die Reibungskupplung (1) zumindest einen Kupplungsdeckel (2), eine entlang einer Drehachse (3) der Reibungskupplung (1) in einer axialen Richtung (4) verlagerbare Anpressplatte (5) sowie ein Hebelelement (6) zur Betätigung der Anpressplatte (5) aufweist, wobei zumindest eine erste Reibscheibe (13) zwischen einer Gegenplatte (16) und der mindestens einen Lamelle (8) und eine zweite Reibscheibe (14) zwischen der mindestens einen Lamelle (8) und der Anpressplatte (5) anordenbar ist und beide Reibscheiben (13, 14) in der Umfangsrichtung (9) formschlüssig mit einer Nabe (17) verbindbar sind,
**dadurch gekennzeichnet, dass**
die Anpressplatte (5) eine Mehrzahl von Aufnahmen (7) zur Aufnahme von zumindest einer Lamelle (8) aufweist, wobei jede der Aufnahmen (7) mit jeder der mindestens einen Lamelle (8) in einer Umfangsrichtung (9) eine formschlüssige Verbindung ausbildet; wobei die mindestens eine Lamelle (8) in einer radialen Richtung (10) innerhalb der Aufnahmen (7) an jeder der in die axiale Richtung (4) weisenden Stirnflächen (11) eine Reibfläche (12) aufweist, wobei jede Reibfläche (12) mit einer von einer Mehrzahl von Reibscheiben (13, 14, 15) der Reibungskupplung (1) zur Übertragung eines Drehmoments reibschlüssig verbindbar ist.

2. Reibungskupplung (1) nach Anspruch 1, wobei die Reibungskupplung (1) eine normal eingerückte Reibungskupplung (1) ist, bei der bei unbetätigtem Hebelelement (6) die Anpressplatte (5) über die mindestens eine Lamelle (8) und die Gegenplatte (16) mit den Reibscheiben (13, 14, 15) reibschlüssig verbindbar ist.

3. Reibungskupplung (1) nach einem der vorhergehenden Ansprüche, wobei die Reibungskupplung (1) eine Nass-Kupplung ist.

4. Reibungskupplung (1) nach einem der vorhergehenden Ansprüche, wobei die Reibungskupplung (1) eine Einfachkupplung ist und genau eine Anpressplatte (5) aufweist.

5. Reibungskupplung (1) nach einem der vorhergehenden Ansprüche, wobei die Anpressplatte (5) über eine Mehrzahl von Blattfedern (18) mit dem Kupplungsdeckel (2) verbunden ist.

6. Reibungskupplung (1) nach Anspruch 4, wobei jede Blattfeder (18) in der radialen Richtung (10) außerhalb der Reibflächen (12) an der Anpressplatte (5) angebunden ist.

7. Reibungskupplung (1) nach einem der vorhergehenden Ansprüche, wobei die Reibungskupplung (1) mindestens zwei Lamellen (8) aufweist, wobei zwischen den zwei Lamellen (8) eine dritte Reibscheibe (15) anordenbar ist und die dritte Reibscheibe (15) in der Umfangsrichtung (9) formschlüssig mit einer Nabe (17) verbindbar ist.

8. Reibungskupplung (1) nach einem der vorhergehenden Ansprüche, wobei in der Mehrzahl von Aufnahmen (7) der einen Anpressplatte (5) eine unterschiedliche Anzahl von Lamellen (8) anordenbar sind.

9. Reibungskupplung (1) nach einem der vorhergehenden Ansprüche, wobei die Aufnahmen (7) entlang der Umfangsrichtung (9) gleichmäßig voneinander beabstandet angeordnet sind.

10. Reibungskupplung (1) nach einem der vorhergehenden Ansprüche, wobei die Reibungskupplung (1) zusätzlich die Gegenplatte (16) und die Mehrzahl von Reibscheiben (13, 14, 15) umfasst.

## Claims

1. A friction clutch (1) for coupling a drive shaft of a motor vehicle engine to a transmission input shaft of a motor vehicle transmission, wherein the friction clutch (1) has at least one clutch cover (2), a pressure plate (5) that can be displaced in an axial direction (4) along an axis of rotation (3) of the friction clutch (1), and a lever element (6) for actuating the pressure plate (5),
wherein at least one first friction disc (13) can be arranged between a counterplate (16) and the at least one plate (8) and a second friction disc (14) can be arranged between the at least one plate (8) and the pressure plate (5) and both friction discs (13, 14) can be connected in a form-locking manner to a hub (17) in the circumferential direction (9),
**characterised in that** the pressure plate (5) has a plurality of receptacles (7) for receiving at least one plate (8), wherein each of the receptacles (7) forms a form-locking connection with each of the at least one plates (8) in a circumferential direction (9), wherein the at least one plate (8) has a friction surface (12) in a radial direction (10) within the receptacles (7) on each of the end surfaces (11) pointing in the axial direction (4), wherein each friction surface (12) can be frictionally connected with one of a plurality of friction discs (13, 14, 15) of the friction clutch (1) for transmitting a torque.

2. The friction clutch (1) according to claim 1, wherein the friction clutch (1) is a normally engaged friction clutch (1), with which the pressure plate (5) can be frictionally connected with the friction discs (13, 14, 15) via the at least one plate (8) and the counterplate (16) when the lever element (6) is not actuated.

3. The friction clutch (1) according to any one of the preceding claims, wherein the friction clutch (1) is a wet clutch.

4. The friction clutch (1) according to any one of the preceding claims, wherein the friction clutch (1) is a single clutch and has exactly one pressure plate (5).

5. The friction clutch (1) according to any one of the preceding claims, wherein the pressure plate (5) is connected to the clutch cover (2) via a plurality of leaf springs (18).

6. The friction clutch (1) according to claim 4, wherein each leaf spring (18) is connected to the pressure plate (5) in the radial direction (10) outside the friction surfaces (12).

7. The friction clutch (1) according to any one of the preceding claims, wherein the friction clutch (1) has at least two plates (8), wherein a third friction disc (15) can be arranged between the two plates (8) and the third friction disc (15) can be connected in a form-locking manner to a hub (17) in the circumferential direction (9).

8. The friction clutch (1) according to any one of the preceding claims, wherein a different number of plates (8) can be arranged in the plurality of receptacles (7) of the one pressure plate (5).

9. The friction clutch (1) according to any one of the preceding claims, wherein the receptacles (7) are arranged uniformly spaced from one another along the circumferential direction (9).

10. The friction clutch (1) according to any one of the preceding claims, wherein the friction clutch (1) additionally comprises the counterplate (16) and the plurality of friction discs (13, 14, 15).

## Revendications

1. Embrayage à friction (1) pour accoupler un arbre d'entraînement d'un moteur de véhicule automobile à un arbre d'entrée d'une boîte de vitesses d'un véhicule automobile ; l'embrayage à friction (1) présentant au moins un couvercle d'embrayage (2), un plateau de pression (5) qui peut être déplacé dans une direction axiale (4) le long d'un axe de rotation (3) de l'embrayage à friction (1) et un élément levier (6) pour actionner le plateau de pression (5),
au moins un premier disque de friction (13) pouvant être disposé entre un contre-plateau (16) et l'au moins une lamelle (8) et un deuxième disque de friction (14) entre l'au moins une lamelle (8) et le plateau de pression (5) et les deux disques de friction (13, 14) peuvent être reliés par complémentarité de forme à un moyeu (17) dans la direction circonférentielle (9),
**caractérisé en ce que** le plateau de pression (5) comporte une pluralité de cavités (7) pour recevoir au moins une lamelle (8), chacune des cavités (7) formant une liaison par complémentarité de forme avec chacune des au moins une lamelle (8) dans une direction circonférentielle (9) ; l'au moins une lamelle (8) présentant une surface de friction (12) dans une direction radiale (10) à l'intérieur des cavités (7) sur chacune des faces frontales (11) dirigées dans la direction axiale (4), chaque surface de friction (12) pouvant être reliée par friction à l'un d'une pluralité de disques de friction (13, 14, 15) de l'embrayage à friction (1) pour transmettre un couple.

2. Embrayage à friction (1) selon la revendication 1, l'embrayage à friction (1) étant un embrayage à friction (1) normalement engagé, dans lequel, lorsque l'élément levier (6) n'est pas actionné, le plateau de pression (5), par l'intermédiaire de l'au moins une lamelle (8) et du contre-plateau (16), peut être relié par friction aux disques de friction (13, 14, 15).

3. Embrayage à friction (1) selon l'une quelconque des revendications précédentes, l'embrayage à friction (1) étant un embrayage humide.

4. Embrayage à friction (1) selon l'une quelconque des revendications précédentes, l'embrayage à friction (1) présentant un embrayage unique et comportant exactement un plateau de pression (5).

5. Embrayage à friction (1) selon l'une quelconque des revendications précédentes, le plateau de pression (5) étant relié au couvercle d'embrayage (2) par l'intermédiaire d'une pluralité de ressorts à lames (18).

6. Embrayage à friction (1) selon la revendication 4, chaque ressort à lame (18) étant relié au plateau de pression (5) dans la direction radiale (10) en dehors des surfaces de friction (12).

7. Embrayage à friction (1) selon l'une quelconque des revendications précédentes, l'embrayage à friction (1) comportant au moins deux lamelles (8), un troisième disque de friction (15) pouvant être disposé entre les deux lamelles (8) et le troisième disque de friction (15) pouvant être relié par complémentarité de forme à un moyeu (17) dans la direction circonférentielle (9).

8. Embrayage à friction (1) selon l'une quelconque des revendications précédentes, un nombre différent de lamelles (8) pouvant être disposé dans la pluralité de cavités (7) du plateau de pression (5).

9. Embrayage à friction (1) selon l'une quelconque des revendications précédentes, les cavités (7) étant disposées uniformément espacées les unes des autres le long de la direction circonférentielle (9).

10. Embrayage à friction (1) selon l'une quelconque des revendications précédentes, l'embrayage à friction (1) comprenant en outre le contre-plateau (16) et la pluralité de disques de friction (13, 14, 15).
